Europäisches Patentamt

European Patent Office

Office européen des brevets

(11) Publication number : **0 516 429 A1**

# (12) EUROPEAN PATENT APPLICATION

(21) Application number : **92304862.3**

(22) Date of filing : **28.05.92**

(51) Int. Cl.$^5$ : **F16B 35/06, F16B 23/00**

(30) Priority : **29.05.91 JP 152282/91**

(43) Date of publication of application :
**02.12.92 Bulletin 92/49**

(84) Designated Contracting States :
**DE FR GB NL SE**

(71) Applicant : **TOPURA CO., LTD**
**2-50 Yayoicho, Higashi**
**Osaka-shi, Osaka-fu (JP)**

(72) Inventor : **Nagushi, Eiichi**
**2-47 Murata 3-chome**
**Chigasaki-shi, Kanagawa-Ken (JP)**
Inventor : **Akashi, Tetsuya**
**395-4 Higashitawara**
**Hatano-shi, Kanagawa-Ken (JP)**
Inventor : **Iwasaki, Osami**
**2111-28 Minamiyana**
**Hatano-shi, Kanagawa-Ken (JP)**

(74) Representative : **W.P. Thompson & Co.**
**Coopers Building, Church Street**
**Liverpool L1 3AB (GB)**

(54) **Drilling screw.**

(57)   Modification of the shape of a head part of a drilling screw resulting in an improved inserting performance when a punching operation is carried out, a fastening performance when the screw is seated, and a finishing process upon completion of fastening against a fastened member.

A seat (12) of the head part (6) has a frusto-conical surface, the outer circumference of the seat (12) being a curved concave surface. The upper surface (9) of the head part (6) is formed into a spherical concave surface. The head part (6) is provided with a plurality of slot facing projections (15) extending from the small diameter part (11b) at a lower portion of the head part (6) adjacent to a threaded shank part (4) of the screw along the curved concave surface of the seat surface (12) in a longitudinal direction. The upper surface (9) of the head part formed with a spherical concave surface is provided with chamfered portions (13) in which an opening edge of the engaging groove (10) of a cross-shaped hole is cut in a conical shape.

## F I G. 3

EP 0 516 429 A1

This invention relates to a drilling screw, and in particular, but not exclusively, to a drilling screw for fastening a panel member, such as a building wall, ceiling or the like, to a base material at a main structure side.

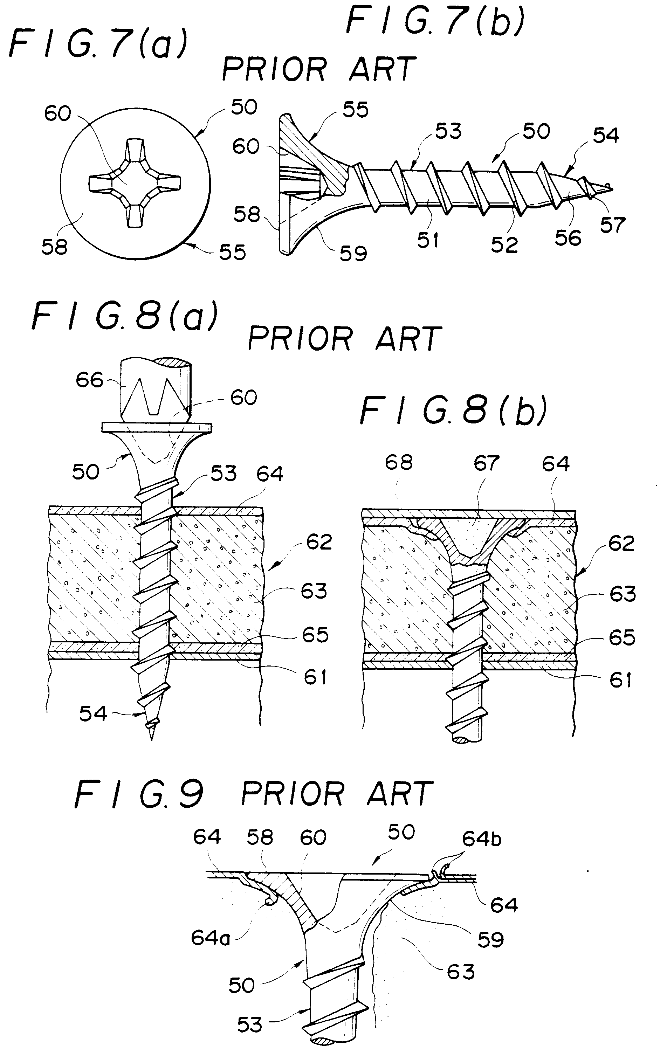

This type of drilling screw in the prior art is known as a dry wall screw and is constructed as shown in Fig.7. This drilling screw 50 is used for fastening a panel member such as a gypsum board 62 tensionally applied to the surface of a steel base material 61 of a light weight steel section constituting an edge of structure at a main structure side, such as a building wall or a ceiling (see Fig.8).

In addition to the steel base material 61, there are wooden structural materials, such as wood or particle board, which may be used. In addition to the aforesaid gypsum board 62 as a panel member, materials such as plywood, hard board or a flexible board etc. may be used.

However, the drilling screw of the present invention can be used for fastening various types of panel members to various types of base materials and is particularly suitable for fastening either a hard panel or a fragile gypsum board to a steel base material having a thin wall.

The drilling screw of the prior art type described above comprises a threaded shank part 53 having a peripheral thread 52 on a cylindrical shank part 51, a drilling part 54 contiguous with one end of the threaded part 53 and a head part 55 at the other end of the threaded shank 53.

The drilling part 54 is formed from a tapering shaft part 56 which gradually decreases in diameter from the shank part 51 toward its extreme end and an external thread 57 contiguous with the thread 52 on the periphery of the tapered shank 56, wherein the fastening is carried out while the drilling part 54 co-operates with the threaded shank part 53 to perform a piercing and tapping operation.

The head part 55 has a circular flat upper surface 58, the outer circumferential edge of which is concentric to and projects radially outwardly from the aforesaid shank part 51. The head 55 has in a central part of the upper surface 58 an engaging groove 60 such as a cross-shaped hole in which a screwdriver tool can be engaged. A frusto-conically shaped seat surface 59 of the head part 55 extends from the outer circumferential edge of the upper surface 58 to the shank part 51 and has a curved concave surface whose outer circumference gradually decreases in diameter and converges to the shaft diameter of the shaft 51 so as to hold the gypsum board 62 with a strong holding force upon completion of the fastening action. The entire shape of the head 55 is formed into a trumpet-shape .

The drilling screw to which the present invention pertains is not limited to a tapping screw structure as described above, but it can be applied to a screw of a self-drilling structure in which a drilling part having a drill end acting as a self-piercing action similar to that of the generally known type of drill bit is formed at an extreme end of the aforesaid threaded shank part. The drilling part performs a piercing operation and the thread 52 of the threaded shank part 53 is subsequently applied for making a screw setting, for example, a drilling screw disclosed in the gazette of Jap.U.M. Publn.No.Hei 2-29294.

As described above, in the case that the panel member is the gypsum board 62, an additive agent is added to the gypsum of the base material and solidified into a plate form and the gypsum board is fragile, resulting in that the protection sheets 64 and 65 having superior adhering characteristic and coating characteristic such as a cardboard, fibre or the like, are applied to both surfaces of the gypsum plate 63 with adhesive agent.

When the gypsum board 62 is to be fixed, as shown in Fig.8 (a), an extreme end of the screwdriver tool 66 is engaged in the engagement groove 60 of the drilling screw 50, the screwdriver tool 66 is rotated and the drilling part 54 of the drilling screw 50 pierces the gypsum board 62. With such an arrangement, the drill part 54 reaches the steel base material 61 while punching in sequence against the gypsum board 62, the piercing and tapping are carried out in the steel base material 61, subsequently the threaded shank part 53 is threaded into the steel base material 61, the upper surface 58 of the head part 55 is flush with the surface of the gypsum board 62. However, preferably fastening is completed while the upper surface is slightly recessed. Then the upper surface 58 of the head part 55 containing the engaging groove 60 is made flush with a putty coating 67 with respect to the recessed surface of the gypsum board 62 generated at an outer circumferential edge so as to make a uniform surface. Alternatively, a paint finishing process can be used to apply mortar or a cloth applying process can be used to apply an ornamental cloth 68 over the surface of the gypsum board 62.

However, the drilling screw 50 having the structure of the prior art has the following drawbacks:
The upper surface 58 of the head part 55 is flat and the engaging groove 60 is formed in the upper surface 58, such that an installing fitness for the screwdriver tool 66 is insufficient.

In recent years, this type of screwdriver tool 66 has been frequently used such that the drilling screws 50 are sequentially supplied, are rotationally driven by a high speed electrical screwdriver such that the screw fastening operations can be efficiently carried out at several locations. Accordingly, if the tip of the screwdriver tool 66 is not accurately fitted in the engaging groove 60, the engaging groove 60 is damaged or dropped and a screwing with a desired rotational torque can not be carried out. Due to this fact, the screw is fastened but the upper surface 58 of the head part 55 is raised from the surface of the gypsum board 62, therefore an insufficient supporting force is attained for the gypsum board 62 and the finishing process with the ornamental material 68 is affected as described below.

For the drilling screw 50, the drilling part 54 at the tip thereof is sharply formed in order to improve the screwing action during a piercing operation and a carbon sintering treatment is carried out for the screw and at the same time its outer circumference is formed as an inverted frusto conical surface seat surface 59 (a trumpet shape) of curved concave surface so that the gypsum board 62 can be pressed with a strong holding force upon completion of the fastening work.

However, since the seat surface 59 has no cutting capability and the circumferential surface of the seat surface 59 contacts the gypsum 63 during the screwing action it.can act as a substantial resistance to the screwing operation and therefore requires a substantial thrusting force (a pushing force). Therefore, the application of an excessive thrust force may cause the thread formed in the steel base material 61 to be destroyed or the screw fastened while the upper surface 58 of the head 55 is being raised from the surface of the gypsum board 62.

In particular, if the steel base material 61 is thin and the gypsum board 62 is of a high hardness, even if a cutting force of the drilling part 54 is improved as described above and a screwing torque for use in piercing the steel base material 61 is reduced, it becomes necessary to provide a larger thrusting force than the screwing torque for driving the head part 55 as described above, resulting in that the thread sunk in the steel base material 61 is damaged and the drilling screw 50 runs idle. As a result, the screw is fastened with the upper surface 58 of the head part 55 raised from the surface of the gypsum board 62. A sufficient supporting force can not be attained for the gypsum board 62 and the later finishing process with an ornamenntal material 68 may be affected as described below.

It is preferable that a height of the upper surface 58 of the head part 55 upon completion of the fastening operation is in such a degree as one in which it is slightly concaved with respect to the surface of the gypsum board 62 so as to enable the concave surface to be repaired with a putty coating 67. However, the upper surface 58 of the head part 55 is projected from the surface of the gypsum board 62 due to the aforesaid reasons or the height of the upper surface 58 of the head 55 in respect to the surface of the gypsum board 62 is not made constant due to a characteristic of the steel base material 61 and the gypsum board 62 as well as a disturbance of the fastening force. Due to this fact, the upper surface 58 of the head part 55 is projected, resulting in that the projected surface can not be repaired with the putty coating 67. Even in the case of a flush surface, the metallic surface shows a poor putty application thereon and the upper surface 58 of the flat head 55 can not have a putty coating 67 applied in sufficient thickness such that the putty coating 67 may easily be peeled off when dried. Even if a finishing process with an ornamental material 68 is carried out, some irregular corrugated portions are generated and a uniform and superior finished surface can not be attained.

The protection sheet 64 broken by the screwing action of the drilling screw 50 is drawn into the gypsum 63 by the action of the head part 55. The protection sheet 64 is peeled off (see Fig.9) and the peeled-off partially broken piece 64a can not be pressed with the seat surface 59 but is wound around the seat surface 59 in an irregular fashion, with the result that upon completion of the fastening operation of the screw, the seating state of the seat surface 59 is inferior and the seating is made unstable with the head part 55 being inclined or raised resulting in that the supporting force against the gypsum board 62 is reduced.

In addition, the partially bulged-out and finely split peeled piece 64b protrudes outwardly from an outer circumferential edge of the head part 55 upon completion of the fastening operation. If the finishing process with the putty coating 67 or the ornamental material 68 is carried out with the peeled piece 64b in this state, then some corrugated portions are generated and a uniform and superior finished surface can not be attained, so that a quite troublesome manual operation is required for cutting the corrugated portions or grinding them off with sandpaper.

In view of the foregoing, it is an object of the present invention to provide a drilling screw capable of overcoming or alleviating these problems.

It is also an object of the present invention to provide a drilling screw to which the fitting of a screwdriver tool may be more accurately and easily performed.

It is a still further object of the present invention to provide a drilling screw in which the resistance during the sinking of the drilling screw is reduced and the performance of the sinking operation is improved.

It is a still further object of the present invention to provide a drilling screw in which idle rotation of the drilling screw, caused by an excessive thrust force, is alleviated or prevented and a supporting force of the drilling screw is improved.

It is an object of the present invention to provide a drilling screw in which a head part is buried in a target surface upon completion of a fastening operation and the drilling screw is suitable for finishing with a putty coating or the like.

It is also an object of the present invention to provide a drilling screw in which damage to the protective covering sheet on the target surface is prevented in order to improve the supporting force of the drilling screw.

It is also an object of the present invention to provide a drilling screw which is suitable for preventing the turning-up of the protective covering sheet on the target surface as well as its fine split and thereby reducing the surface finishing work.

In accordance with the present invention there is provided a drilling screw in which the drilling screw has a threaded shank part, a drill part having a sharp or drill end at one end of the threaded shank part, a head part arranged at the other end of the threaded shank part forming a seat surface of a frusto-conical shape with its outer periphery being a curved concave surface, and the upper surface of the head part has an engaging groove, such as a cross-shaped hole, in which a screwdriver tool can be fitted, characterised in that the upper surface of the head part including a mouth edge of the engaging groove is formed into a spherical concave surface.

Preferably, the upper surface of a head part is formed into the aforesaid spherical concave surface provided with a chamfered part machined to have an inward tapered part by cutting an edge of an opening of the engaging groove into a cone shape.

Preferably, the seat of the head part has a plurality of slot facing projections arranged at a seat surface of the head part in equally-spaced apart relation at an outer circumference of a small diameter part positioned adjacent to the screw shaft part and along the curved concave surface of the seat surface.

The invention is further described, by way of example, with reference to the accompanying drawings, in which:-

Fig.1a is a schematic plan view of the head of a first embodiment of a drilling screw constructed in accordance with the present invention;

Fig.1b is a side view of the screw of Fig.1a;

Fig.2 is a schematic plan view of the head of a second embodiment of the drilling screw;

Fig.3 is a split enlarged longitudinal sectional view of the head part with the right-hand portion illustrating the drilling screw of Fig.1 with the left-hand portion illustrating the drilling screw of Fig.2;

Fig.4 is a partial side view of a third embodiment of the drilling screw;

Fig.5 is a sectional view taken along a line A-A of Fig.4;

Fig.6(a) illustrates the use of the drilling screw of Fig.1;

Fig.6(b) illustrates the use of the drilling screw of Fig.4;

Fig.7(a) is a schematic plan view of the head of a drilling screw of the prior art;

Fig.7(b) is a side view of the screw of Fig.7a with a part being broken away;

Fig.8(a) is a schematic view for showing the insertion of the drilling screw of Fig.7;

Fig.8(b) is a schematic view showing the screw of Fig.7 in the inserted position; and

Fig.9 illustrates the use of the drilling screw of Fig.7.

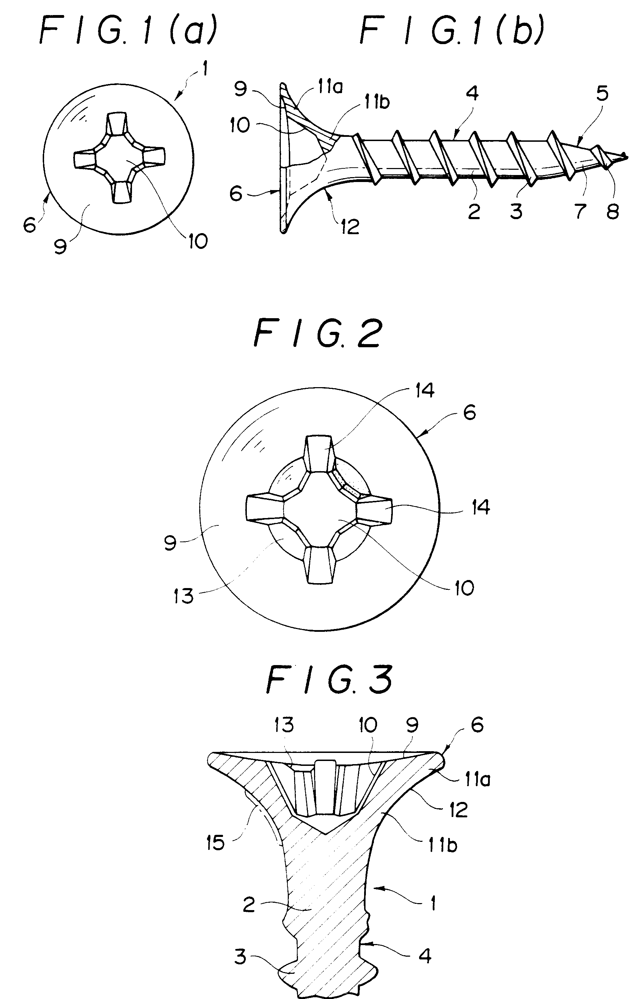

The drilling screw 1 comprises a threaded shank part 4 formed by a thread 3 on the outer periphery of a cylindrical shank 2 as shown in Fig.1, a drill part 5 contiguous with one end of the threaded shank part 4 formed by a thread 8, contiguous with the thread 3 on the outer periphery of a tapered shank 7, the diameter of which gradually decreases from the shank part 4, and a head part 6 at the other end of the threaded shank part 4. The threaded shank part 4 and the drill part 5 have the same configuration as that of the drilling screw 50 of the prior art described above.

The head part 6 has a circular upper surface 9 with an outer circumferential edge projecting substantially in a radial and concentric manner from the shank part 2 and formed with a spherical concave surface having its central part mostly concaved. The central part of the upper surface 9 is provided with an engaging groove 10 such as a cross-shaped hole in which a screwdriver tool can be engaged.

A seat surface 12 is formed by an outer circumference of the head part 6 between the upper surface 9 and the shank part 2 in a so-called trumpet-shape. That is, the seat 12 has an outer periphery extending from a large diameter portion 11a at an upper side of the head part 6, equal to the outer circumferential edge of the upper surface 9, to a small diameter portion 11b at its lower part having the same diameter as that of the threaded shank part 4. The seat 12 is an inverse frusto-cone having a curved concave surface whose diameter is gradually decreased in an axial direction.

Additionally, the head part 6 may also have some chamfered portions 13 as shown in Fig.2 at the upper surface 9 including the engaging groove 10. The chamfered portions 13 are made such that an opening edge between each of wings 14 is cut in a conical shape in respect to a concentric circle traversing at a substantial intermediate part in a radial direction of each of the wings 14 forming the engaging groove 10 so as to form an inwardly-directed tapered surface.

In addition, the right-hand half of Fig.3 is a sectional view of the head part of Fig.1(a) having no chamfered portion 13, whilst the left-hand half of Fig.3 is a sectional view of the head part shown in Fig.2 having the chamfered portion 13.

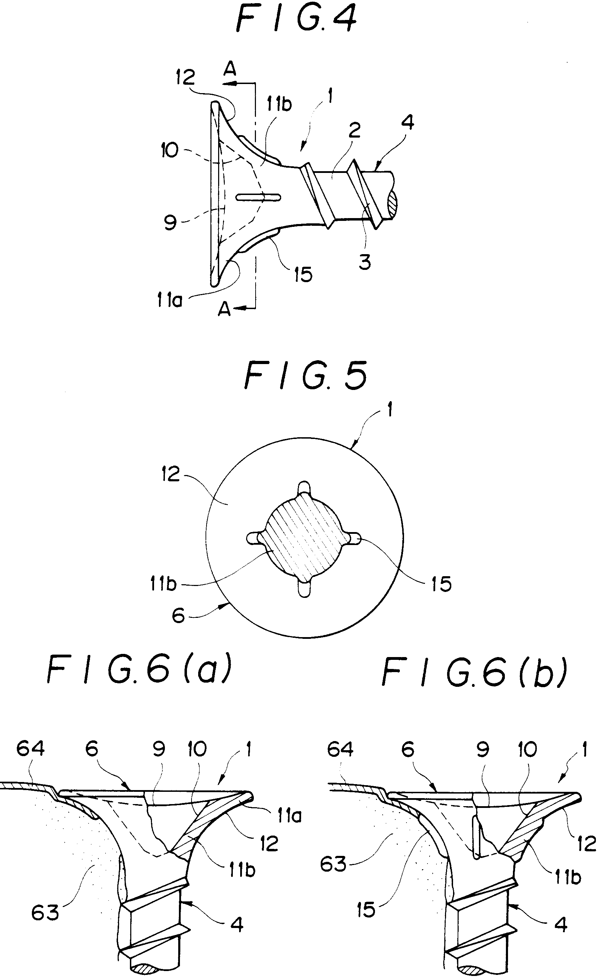

In the screw of Fig.4 the shape of the head part 6 is further modified, wherein a plurality of slot facing projections 15 are formed on the seat surface 12.

The slot facing projections 15 are equidistantly spaced about the circumference of a small diameter part 11b of the lower portion adjacent to the threaded shank part 4 and are longitudinally projected along the curved concave surface of the seat surface 12 at a specified height and width, as shown in Fig.5, for example.

When the gypsum board 62 of the panel member is fastened in the same manner as that of the prior art shown in Fig.8 with the drilling screw 1 having the aforesaid configuration, the screw may act as follows:

As the tip of the rotating screwdriver tool 66 is abutted against the upper surface 9 of the head part 6 of the drilling screw 1, it is guided into the engaging groove 10 in the central part along the spherical concave surface and even though its axial point is slightly displaced, the tool can be positively installed.

In addition, as shown in Fig.2, if the opening edge of the engaging groove 10 is provided with some chamfered portions 13, the tip of the screwdriver tool 66 is transferred smoothly from the spherical concave surface into the engaging groove 10 and thereby the installation of the screwdriver tool 66 in the screw can be improved.

Accordingly, the rotational torque of the screwdriver tool 66 is transmitted positively to the drilling screw 1 to get the desired thrust and at the same time it is possible to prevent the tip of the screwdriver tool 66 from damaging the engaging groove 10 of the cross-shaped hole.

The drilling screw 1 rotated by the screwdriver tool 66 is operated such that the drill part 5 at its tip breaks through the protection sheet 64 and pierces into the gypsum board 62. The gypsum plate 63 is then punched in sequence and the drill part passes through the protection sheet 65, reaches the steel base material 61, performs a piercing and tapping operation in the steel base material 61 and then the threaded shank part 4 is sunk in the steel base material 61.

In addition, the seat surface 12 of the head part 6 is pushed into the gypsum board 62 punched by the threaded shank part 4 and seated and inserted while the upper surface 9 of the head part 6 is being slightly concaved from the surface of the gypsum board 62 as shown in Fig.6(a).

If the slot facing projections 15 are formed at the small diameter portion 11b of the head part 6 forming the seat surface 12, the slot facing projections 15 cause the pushing action to be interrupted for a minute moment before starting a cutting operation during the inserting action. Thereafter, the seat surface 12 cuts the gypsum 63 using the slot facing projections 15 and the frictional resistance is reduced because of a low contact area with the gypsum board. The small diameter portion 11b of the head part 6 is pushed with a low thrusting force and at a slow speed and finally a large diameter portion 11a of the head part 6 having no slot facing projections 15 is pushed into the board. With such an arrangement, the head part 6 is pushed into the board while the thrusting force is dispersed at an upper side and a lower side at an interface between the existence and a non-existence of the slot facing projections 15.

As described above, the force for pushing the head part 6 into the board is reduced and the unbalanced state with a screwing torque for the steel base material 61 by the drill part 5 is decreased. Thereby, the head part 6 is prevented from being pushed straight into the board at a fast speed, even in the case that a plate thickness of the steel base material 61 is thin and the gypsum board 62 is hard, and the thread sunk in the steel base material 61 can be prevented from being damaged, the drilling screw can be prevented from being rotated idle or the drilling screw can be prevented from being fastened while the upper surface 9 of the head part 6 is being raised from the surface of the gypsum board 62, resulting in that a sufficient supporting force can be attained with respect to the gypsum board 62.

The gypsum board 62 cut by the slot facing projections 15 as described above is stored in such a way as the gypsum 63 or cut flocks of the protection sheet 64 or the like may be prevented from bulging out between each of the slot facing projections 15 as shown in Fig.6(b) and at the same time the protection sheet 64 is uniformly expanded outwardly at the seat face 12 of the large diameter part 11a of the head 6.

Accordingly, the stability of the head 6 in its seated state is improved, and a supporting force of the head part against the gypsum board 62 is improved upon completion of the fastening operation. Also, the removal of bulged-out portions of the protection sheet 64 is eliminated and the putty coating 67 or a finishing treatment with the ornamental material 68 can be carried performed for making a uniform and superior finished surface.

As described above, when the fastening with the drilling screw 1 is completed, it is preferable that the upper surface 9 of the head part 6 is slightly concaved with respect to the surface of the gypsum board 62 in view of the foregoing reasons. However, even in the event that the head surface is flush with the board due to various causes, the drilling screw 1 having the upper surface 9 of the head part formed into a spherical concave surface enables the later finishing process to be adequately performed.

That is, even if the upper surface 9 of the head part 6 is flush with the board, the outer circumferential edge is set at a limited fine annular part and an inner circumferential surface is in a concaved surface from the surface of the gypsum board 62, so that there is sufficient thickness of putty coating on the upper surface 9 of the head part 6 and the disturbance caused by the projected state of the head part 6 can therefore be corrected.

As apparent from the aforesaid preferred embodiments, the following effects can be expected with the drilling screw of the present invention.

The upper surface of the head part is formed into a spherical concave surface so as to enable the screwdriver tool to be guided into the engaging groove and positively fitted therein. Therefore, the rotational torque of the screwdriver tool is positively transmitted to the drilling screw in order to get the desired thrusting force and at the same time the tip of the screwdriver tool can be prevented from being damaged.

The opening edge of the fitting groove formed at the upper surface of the head part with the spherical concave surface is provided with a chamfered part for guiding the screwdriver tool into the fitting groove, thereby installation of the screwdriver tool within the groove can be improved.

Since the upper surface of the head part with the aforesaid spherical concave surface is made such that the upper surface of the head part is concaved within the surface of the gypsum board upon completion of the fastening operation, it is possible to correct the projection of the head part caused by the disturbance during fastening and at the same time the putty coating can be assured so as not to peel with respect to the upper surface of the head part and then the subsequent finishing work can be of a superior quality.

Since the aforesaid slot facing projections are formed at the small diameter portion of the seat surface adjacent to the threaded shank part so as to cause the head part to be gradually pushed into the board with a small thrusting force, the unbalanced state of the screwing torque with respect to the steel base material from the drilling part is reduced. Even if the plate thickness of the steel base material is thin and the gypsum board of a high hardness the thread sunk in the steel base material is prevented from damage or the screw is prevented from being fastened while the upper surface of the head part is raised from the surface of the gypsum board and a sufficient supporting force may be obtained for the gypsum board.

Additionally, the cut flocks of gypsum or protection sheet are stowed between each of the adjoining slot facing projections and the seat surface of the large diameter part at the upper part of the head part where the slot facing projections are not present, the protection sheet is expanded outwardly in a uniform manner, so that a seated state of the head part upon completion of the fastening can be stabilised. The supporting force of the screw against the gypsum board can therefore be improved.

At the same time the troublesome removing operation for the bulged-out portions of the protection sheet in the prior art can be eliminated and the finishing process with the putty coating or the ornamental material has a uniform and superior finished surface.

## Claims

1. A drilling screw in which the drilling screw has a threaded shank part (4), a drill part (5) having a sharp or drill end at one end of the threaded shank part (4), a head part (6) arranged at the other end of the threaded shank part (4) forming a seat surface (12) of a frusto-conical shape with its outer periphery being a curved concave surface, and the upper surface (9) of the head part (6) has an engaging groove (10) such as a cross-shaped hole, in which a screwdriver tool (66) can be fitted, characterised in that the upper surface (9) of the head part (6) including a mouth edge of the engaging groove (10) is formed into a spherical concave-surface.

2. A drilling screw as claimed in claim 1, in which the upper surface (9) of the head part (6) formed as a spherical concave surface is provided with a plurality of chamfered portions (13) formed by forming the opening edge of the engaging groove (10) into a conical shape and by forming it into an inwardly tapered shape.

3. A drilling screw as claimed in claim 1 or 2, in which the seat surface (12) of said head part (6) is provided with a plurality of slot facing projections (15) extending longitudinally along the curved concave surface of the seat surface (12), the slot facing projections (15) being equally-spaced apart about the outer periphery of the seat surface (12), and are positioned at an adjoining side of the threaded shank part (4).

FIG.1(a)

FIG.1(b)

FIG.2

FIG.3

# F I G. 4

# F I G. 5

# F I G.6 (a)

# F I G.6 (b)

FIG.7(a)

FIG.7(b)
PRIOR ART

FIG.8(a)
PRIOR ART

FIG.8(b)

FIG.9  PRIOR ART

European Patent
Office

**EUROPEAN SEARCH REPORT**

Application Number

EP 92 30 4862

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-U-8 523 491 (MAGE AG) | 1 | F16B35/06 |
| Y | * the whole document * | 2,3 | F16B23/00 |
| | --- | | |
| Y | EP-A-0 257 664 (KNOCHE,ALFONS) | 2 | |
| | * page 10, line 3 - page 11, line 4; figures 1-7 * | 10 | |
| | --- | | |
| Y | EP-A-0 268 961 (PERI-WERK ARTUR SCHWÖRER GMBH) | 3 | |
| | * the whole document * | | |
| | --- | | |
| A | AU-B-477 805 (W.A.DEUTSHER PROPIETARY LIMITED) | 3 | |
| | * the whole document * | | |
| | --- | | |
| A | DE-A-2 618 945 (BULTEN-KANTHAL AB) | 2 | |
| | * the whole document * | | |
| | --- | | |
| A | DE-A-2 732 695 (K.K.YAMASHINA SEIKOSHO) | | |
| | ----- | | |
| | | | **TECHNICAL FIELDS SEARCHED (Int. Cl.5)** |
| | | | F16B |

The present search report has been drawn up for all claims

| Place of search | Date of completion of the search | Examiner |
|---|---|---|
| THE HAGUE | 07 SEPTEMBER 1992 | ARESO Y SALINAS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P0401)